# EUROPEAN PATENT APPLICATION

(11) **EP 4 609 758 A1**
(43) Date of publication of application: **03.09.2025**
(21) Application number: 23920676.6
(22) Date of filing: 18.06.2023
(51) Int. Cl.: A47C 27/14, A47G 27/02

(54) **ELASTIC CORE STRUCTURE AND HOUSEHOLD ARTICLE**

(30) Priority: 10.02.2023 CN 202310110819; 10.02.2023 CN 202320331206 U
(71) Applicant: HANGZHOU JISENCHUAN TRADING CO., LTD, Hangzhou, Zhejiang 311258 (CN)
(72) Inventor: XU, Shengping, Hangzhou, Zhejiang 310051 (CN)
(74) Representative: Metida
(86) International application number: PCT/CN2023/100922
(87) International publication number: WO 2024/164479

(57) **Abstract**

Provided in the present application is an elastic core structure. The elastic core structure comprises a plurality of elastic layers of a planar structure, wherein the plurality of elastic layers are sequentially arranged at intervals from top to bottom; each of the elastic layers comprises a plurality of annular bodies of an annular structure, the plurality of annular bodies in each of the elastic layers are arranged in an array, and every two adjacent annular bodies in each of the elastic layers are connected to each other; and in two vertically-adjacent elastic layers, every two vertically-corresponding annular bodies are connected to each other by means of an elastic column, and every two vertically-corresponding annular bodies and the corresponding elastic column are connected to form a hollow-out body of a hollow structure. The elastic core structure not only has a high support strength, but is also less prone to collapse and deformation, and has a good air permeability. Moreover, the elastic core structure has a simple structure, a light weight and a low production cost. Further provided in the present application is a household article.

## Description

### Technical Field

The present application relates to the technical field of household article technology, and in particular, to an elastic core structure and a household article.

### Description of Related Art

Mattresses, pillows, floor mats, etc. are common soft household articles in people's daily lives. These soft household articles generally include a cloth cover and an elastic core provided inside the cloth cover. The elastic core serves as a support member to fill the internal space of the cloth cover, thereby giving the soft household articles a certain shape, size, and good comfort.

### BRIEF SUMMARY OF THE INVENTION

### Technical Problem

At present, the elastic core in pillows is generally made of materials such as sponge, cotton, down, etc. The elastic core made of the materials mentioned above has good softness. However, due to their large deformation after compression, the above-mentioned materials may experience partial collapse and shape deformation after long-term use, which not only affects aesthetics but also affects the comfort of use; meanwhile, after being compressed during use, the interior of the elastic core is almost solid and does not have good breathability, which affects the comfort of use.

Also, the elastic core in mattresses is generally made of spring material. The elastic core made of spring material is not only heavy and complex in structure, but also expensive, and requires assembly, thereby increasing production cost.

In view of the above, it is necessary to design an elastic core structure with strong support stability, good breathability, simple structure, and low cost.

### Technical Solution

The object of the present application is to provide an elastic core structure that not only has high support strength and is not prone to collapse and deformation, but also has good breathability, and meanwhile, the structure is simple, lightweight, and has low production cost.

The present application provides an elastic core structure, including multiple elastic layers of a planar structure, wherein the multiple elastic layers are sequentially arranged at intervals from top to bottom; each elastic layer includes multiple annular bodies of an annular structure, the multiple annular bodies in each elastic layer are arranged in an array, and every two adjacent annular bodies in each elastic layer are connected to each other; in two vertically adjacent elastic layers, every two vertically corresponding annular bodies are connected by an elastic column, and the two vertically corresponding annular bodies and the corresponding elastic column are connected to form a hollow body of a hollow structure.

In an achievable manner, in each elastic layer, every two adjacent annular bodies are arranged closely to each other, and there is a common side at the connection position between every two adjacent annular bodies.

In an achievable manner, in each hollow body, the two vertically corresponding annular bodies are connected by multiple elastic columns, and the multiple elastic columns are spaced apart from each other to form a breathable hole between every two adjacent elastic columns.

In an achievable manner, adjacent two hollow bodies are arranged closely to each other, and the adjacent two hollow bodies share one or more elastic columns, the inner cavities of the adjacent two hollow bodies are in communication with each other through the breathable hole.

In an achievable manner, the sides of the annular body and the elastic column are both strip-shaped structures.

In an achievable manner, the annular body is a polygonal annular structure, and the elastic column is connected to a corner position of the annular body.

In an achievable manner, the elastic core structure has a length direction, a width direction, and a thickness direction, the multiple elastic layers are arranged at intervals along the thickness direction, the multiple annular bodies in each elastic layer are arranged in an array along the length direction and the width direction, and the elastic columns extend along the thickness direction.

In an achievable manner, the annular body is a polygonal annular structure, and the hollow body is a polygonal prism structure; or, the annular body is a circular structure, and the hollow body is a cylindrical structure; or, the annular body is an elliptical annular structure, and the hollow body is an elliptical cylindrical structure.

In an achievable manner, the annular body is a regular hexagonal structure, the multiple annular bodies in each elastic layer are connected to each other to form a honeycomb structure, and the hollow body is a hexagonal prism structure.

In an achievable manner, the elastic core structure is made of thermoplastic elastomer materials.

The present application further provides a household article, including the elastic core structure as described above.

In an achievable manner, the household article is mattress, floor mat, seat cushion, backrest, cushion, or pillow.

### Beneficial Effects

The elastic core structure in the present application is provided with multiple elastic layers, each elastic layer includes multiple annular bodies arranged in an array, and two vertically corresponding annular bodies and corresponding elastic columns are connected to form a hollow body of a hollow structure, that is, the elastic core structure is formed by multiple hollow bodies of a hollow structure, so that the elastic core structure has good support strength and breathability, is not easy to collapse and deform, and has good comfort; moreover, its structure is simple, lightweight, and the production cost is low, making it suitable for large-scale production.

### BRIEF DESCRIPTION OF THE DRAWINGS

FIG. 1 is a schematic diagram of the three-dimensional structure of the elastic core structure in an embodiment of the present application.
FIG. 2 is a schematic diagram of the three-dimensional structure of the hollow body in FIG. 1.
FIG. 3 is a schematic diagram of the planar structure of the elastic layer in FIG. 1.
FIG. 4 is a schematic diagram of the structure of a single annular body in FIG. 3.
FIG. 5 is a schematic diagram of the three-dimensional structure of the elastic core structure in another embodiment of the present application.
FIG. 6 is a schematic diagram of the three-dimensional structure of the hollow body in FIG. 5.
FIG. 7 is a schematic diagram of the planar structure of the elastic layer in FIG. 5.
FIG. 8 is a schematic diagram of the planar structure of the elastic layer in another embodiment of the present application.
FIG. 9 is a schematic diagram of the structure of a single annular body in FIG. 8.

### DETAILED DESCRIPTION OF THE EMBODIMENTS

The following will provide a further detailed description of the specific implementations of the present application in conjunction with the accompanying drawings and embodiments. The following embodiments are used to illustrate the present application, but are not intended to limit the scope of the present application.

The terms "first", "second", "third", "fourth", etc. (if any) in the specification and claims of the present application are only used to distinguish similar objects, and are not intended to be used to describe a specific sequence or order.

The terms "up", "down", "left", "right", "front", "back", "top", "bottom" (if any) in the specification and claims of the present application are defined based on the position of the structure in the figures and the position between the structures in the figures, only for the clarity and convenience of expressing the technical solution. It should be understood that the use of these directional words should not limit the scope of protection in the present application.

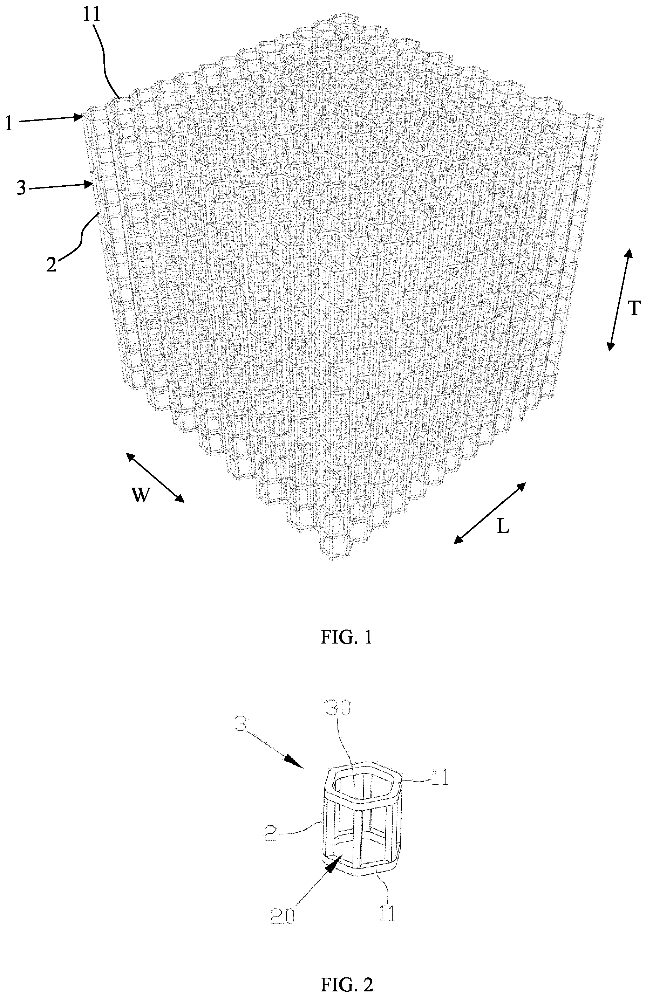

As shown in FIGS. 1 to 4, the elastic core structure provided in an embodiment of the present application includes multiple elastic layers 1 of a planar structure, and the multiple elastic layers 1 are sequentially arranged at intervals from top to bottom. Each elastic layer 1 includes multiple annular bodies 11 of an annular structure, the multiple annular bodies 11 in each elastic layer 1 are arranged in an array, and every two adjacent annular bodies 11 in each elastic layer 1 are connected to each other. In two vertically adjacent elastic layers 1, every two vertically corresponding annular bodies 11 are connected by an elastic column 2, and the two vertically corresponding annular bodies 11 and the corresponding elastic column 2 are connected to form a hollow body 3 of a hollow structure, that is, the elastic core structure is a spatial three-dimensional structure formed by multiple hollow bodies 3 connected to each other.

Specifically, the elastic core structure in this embodiment is provided with multiple elastic layers 1, each elastic layer 1 includes multiple annular bodies 11 arranged in an array, and the two vertically corresponding annular bodies 11 and the corresponding elastic column 2 are connected to form a hollow body 3 of a hollow structure, that is, the elastic core structure is formed by multiple hollow bodies 3 of a hollow structure, so that the elastic core structure has good support strength and breathability, is not easy to collapse and deform, and has good comfort; moreover, its structure is simple, lightweight, and the production cost is low, making it suitable for large-scale production.

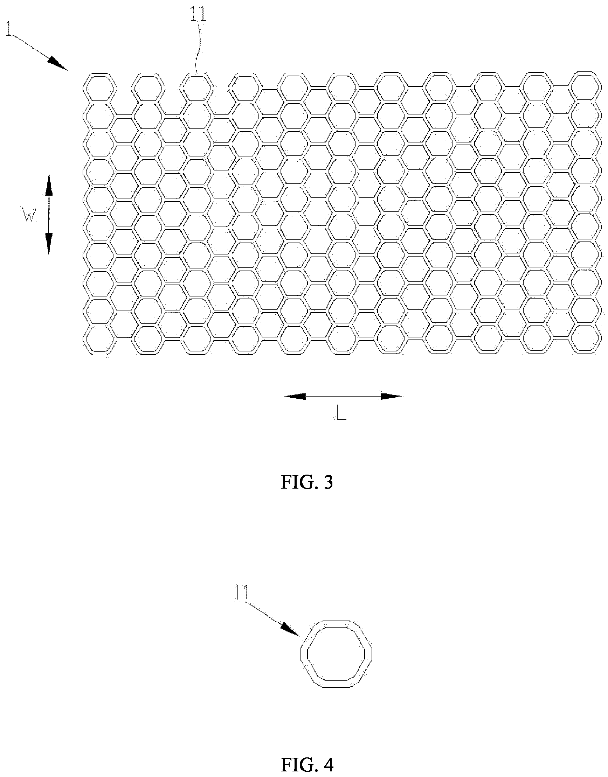

As shown in FIG. 3, as one embodiment, in each elastic layer 1, every two adjacent annular bodies 11 are arranged closely to each other, and there is a common side at the connection position between every two adjacent annular bodies 11 (that is, there is a common side at the connection position between every two adjacent annular bodies 11, and the common side is simultaneously used to form the two annular bodies 11), so that every two adjacent annular bodies 11 are tightly connected, thereby further improving the support strength of the elastic core structure and making it not prone to collapse and deformation.

As shown in FIG. 2, as one embodiment, in each hollow body 3, the two vertically corresponding annular bodies 11 are connected by multiple elastic columns 2, and the multiple elastic columns 2 are spaced apart from each other to form a breathable hole 20 between every two adjacent elastic columns 2.

Specifically, due to the fact that the two vertically corresponding annular bodies 11 in each hollow body 3 are connected by multiple elastic columns 2, the connection strength between the two vertically corresponding annular bodies 11 is thus improved, further enhancing the structural strength of the hollow body 3 and making it not prone to collapse and deformation. Meanwhile, a breathable hole 20 is formed between every two adjacent elastic columns 2, thereby increasing the breathability of the hollow body 3, so that the elastic core structure has good breathability.

As shown in FIG. 2, as one embodiment, each annular body 11 is a polygonal annular structure, and each elastic column 2 is connected to a corner position (i.e., vertex position) of the annular body 11, thereby improving the structural strength of the hollow body 3. Meanwhile, as shown in FIG. 4, the vertex positions of each annular body 11 are also chamfered to facilitate the connection between the elastic columns 2 and the vertex positions of the annular body 11.

As shown in FIG. 2, as one embodiment, each annular body 11 is a regular hexagonal structure, and every two vertically corresponding annular bodies 11 are connected by six elastic columns 2 (that is, each hollow body 3 includes six elastic columns 2), and the six elastic columns 2 are respectively connected to the six vertex positions of the annular body 11.

As shown in FIGS. 1 and 2, as one embodiment, adjacent two hollow bodies 3 are arranged closely to each other, and the adjacent two hollow bodies 3 share one or more elastic columns 2 (that is, the shared elastic column 2 is simultaneously used to form the two hollow bodies 3). The inner cavities 30 of the adj acent two hollow bodies 3 are in communication with each other through the breathable hole 20. As a result, the above structure not only enables a tight connection between adjacent two hollow bodies 3, thereby improving the support strength of the elastic core structure, but also the inner cavities 30 of the adjacent two hollow bodies 3 are in communication with each other through the breathable hole 20, so that a mutually communicated hollow structure is formed inside the entire elastic core structure, thereby ensuring that the elastic core structure have good breathability.

As shown in FIG. 2, as one embodiment, the sides of the annular body 11 and the elastic column 2 are both strip-shaped structures (i.e., elongated linear structures), so that the hollow body 3 is prone to elastic deformation, thereby increasing the elasticity and comfort of the elastic core structure, and also increasing its breathability.

As shown in FIGS. 2 to 4, as one embodiment, each annular body 11 is a polygonal annular structure, and the hollow body 3 is a polygonal prism structure.

As shown in FIGS. 2 to 4, in this embodiment, each annular body 11 is a regular hexagonal structure, each hollow body 3 is a hexagonal prism structure, and the multiple annular bodies 11 in each elastic layer 1 are connected to each other to form a honeycomb structure, thereby ensuring that the elastic core structure has good structural strength and also has good aesthetic appearance.

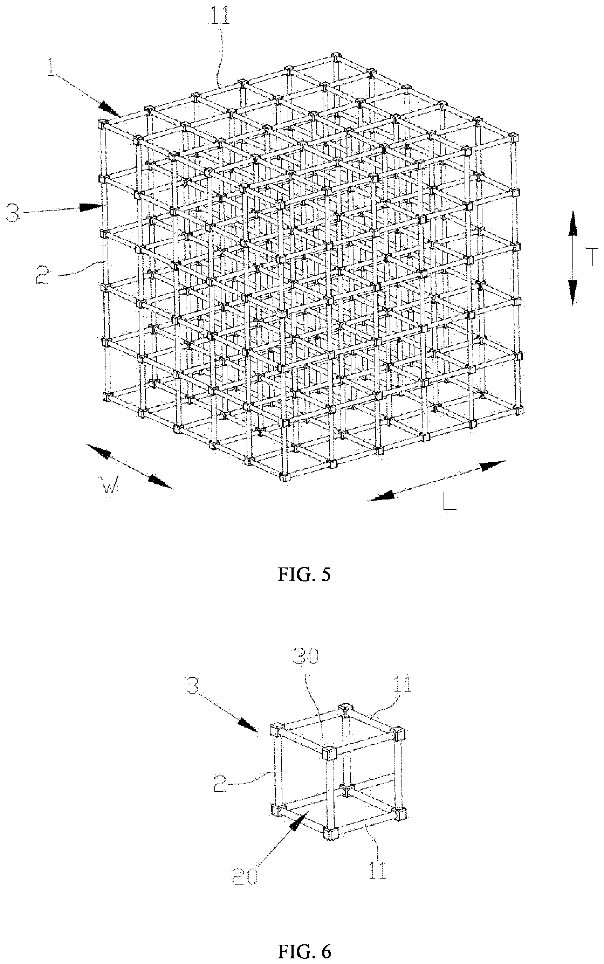

As shown in FIGS. 5 to 7, as another embodiment, each annular body 11 is a regular quadrilateral structure, and each hollow body 3 is a cuboid structure (including a cube structure). Of course, the annular body 11 can also be a triangular structure, and the hollow body 3 is a triangular prism structure; or, the annular body 11 can be other polygonal annular structures, and the hollow body 3 can be other polygonal prism structures.

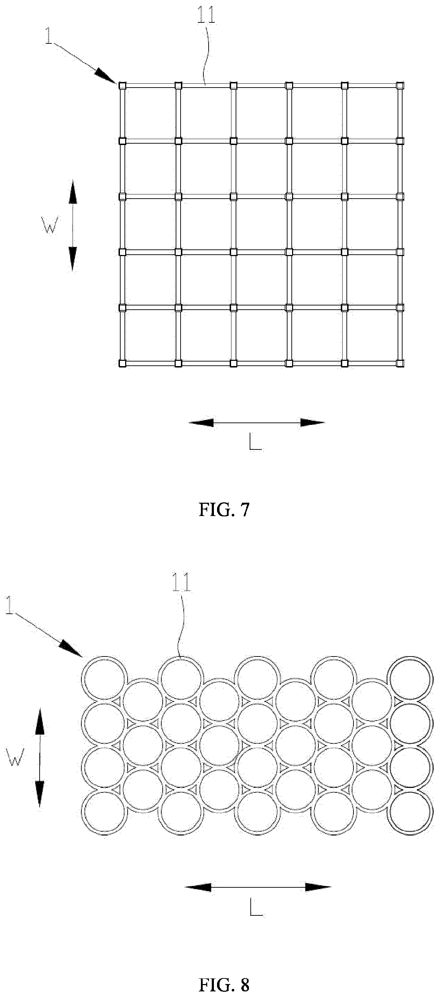

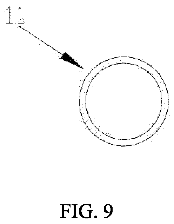

As shown in FIGS. 8 and 9, as another embodiment, each annular body 11 is a circular structure, and each hollow body 3 is a cylindrical structure. Of course, in other embodiments, the annular body 11 can also be an elliptical annular structure, and the hollow body 3 is an elliptical cylindrical structure. Of course, the annular body 11 can also have other regular or irregular shapes.

As shown in FIG. 2, as one embodiment, the hollow body 3 has an octahedral structure (hexagonal prism structure). As shown in FIG. 6, as another embodiment, the hollow body 3 is a hexahedral structure (cuboid structure). Of course, in other embodiments, the hollow body 3 can also be other polyhedral structures.

As shown in FIGS. 1 and 3, as one embodiment, the elastic core structure as a whole is a cuboid structure. The elastic core structure has a length direction L, a width direction W, and a thickness direction T. The multiple elastic layers 1 are arranged at intervals along the thickness direction T, the multiple annular bodies 11 in each elastic layer 1 are arranged in an array along the length direction L and the width direction W, and the elastic columns 2 extend along the thickness direction T. Of course, in other embodiments, the elastic core structure can also be other regular or irregular three-dimensional structures.

As one embodiment, the length, width, and thickness of the elastic core structure are not limited and can be determined according to actual needs.

As one embodiment, the number of the annular bodies 11 in each elastic layer 1 is not limited, and the size of each annular body 11 is also not limited, which can be determined according to actual needs.

As one embodiment, the elastic core structure is made of thermoplastic elastomer materials. Due to the excellent elasticity and structural strength of thermoplastic elastomer materials, as well as their convenient processing and low cost, the elastic core structure has both good elasticity and structural strength, while the production cost is relatively low.

As one embodiment, the elastic core structure can be made of TPE, TPU, PE or silicone materials. Of course, the elastic core structure can also be made of other thermoplastic elastomer materials.

As one embodiment, the entire elastic core structure is integrally formed, so that it does not require assembly.

As one embodiment, the elastic core structure can be made by injection molding, 3D printing, and other methods.

This embodiment of the present application further provides a household article including the elastic core structure described above.

As one embodiment, the household article can be a mattress, and the elastic core structure serves as the elastic support layer inside the mattress. The household article can also be a floor mat or seat cushion, and the elastic core structure serves as the cushion core inside the floor mat or seat cushion. The household article can also be a pillow type item, such as a backrest, cushion, or pillow, and the elastic core structure is used as the pillow core of the pillow type item. Of course, this household article can also be other soft household articles.

The elastic core structure in the embodiments of the present application is provided with multiple elastic layers 1, each elastic layer 1 includes multiple annular bodies 11 arranged in an array, and two vertically corresponding annular bodies 11 and corresponding elastic columns 2 are connected to form a hollow body 3 of a hollow structure, that is, the elastic core structure is formed by multiple hollow bodies 3 of a hollow structure, so that the elastic core structure has good support strength and breathability, is not easy to collapse and deform, and has good comfort; moreover, its structure is simple, lightweight, and the production cost is low, making it suitable for large-scale production. Meanwhile, the elastic core structure has good universality and can be applied to household articles, such as mattress, floor mat, seat cushion, backrest, cushion, or pillow.

The above are only the specific embodiments of the present application, but the scope of protection of the present application is not limited to this. Any technical personnel familiar with this technical field who can easily think of changes or replacements within the scope of technology disclosed in the present application should be covered within the scope of protection of the present application. Therefore, the protection scope of the present application should be based on the protection scope of the claims.

## Claims

1. An elastic core structure, comprising multiple elastic layers (1) of a planar structure, wherein the multiple elastic layers (1) are sequentially arranged at intervals from top to bottom; each elastic layer (1) comprises multiple annular bodies (11) of an annular structure, the multiple annular bodies (11) in each elastic layer (1) are arranged in an array, and every two adjacent annular bodies (11) in each elastic layer (1) are connected to each other; in two vertically adjacent elastic layers (1), every two vertically corresponding annular bodies (11) are connected by an elastic column (2), and the two vertically corresponding annular bodies (11) and the corresponding elastic column (2) are connected to form a hollow body (3) of a hollow structure.

2. The elastic core structure as claimed in claim **1,** wherein in each elastic layer (1), every two adjacent annular bodies (11) are arranged closely to each other, and there is a common side at the connection position between every two adjacent annular bodies.

3. The elastic core structure as claimed in claim **2,** wherein in each hollow body (3), the two vertically corresponding annular bodies (11) are connected by multiple elastic columns (2), and the multiple elastic columns (2) are spaced apart from each other to form a breathable hole (20) between every two adjacent elastic columns (2).

4. The elastic core structure as claimed in claim **3,** wherein adjacent two hollow bodies (3) are arranged closely to each other, and the adjacent two hollow bodies (3) share one or more elastic columns (2), the inner cavities (30) of the adjacent two hollow bodies (3) are in communication with each other through the breathable hole (20).

5. The elastic core structure as claimed in claim **1,** wherein the sides of the annular body (11) and the elastic column (2) are both strip-shaped structures.

6. The elastic core structure as claimed in claim **1,** wherein the annular body (11) is a polygonal annular structure, and the elastic column (2) is connected to a corner position of the annular body (11).

7. 12. The elastic core structure as claimed in claim **1,** wherein the elastic core structure has a length direction (L), a width direction (W), and a thickness direction (T), the multiple elastic layers (1) are arranged at intervals along the thickness direction (T), the multiple annular bodies (11) in each elastic layer (1) are arranged in an array along the length direction (L) and the width direction (W), and the elastic columns (2) extend along the thickness direction (T).

8. The elastic core structure as claimed in claim **1,** wherein the annular body (11) is a polygonal annular structure, and the hollow body (3) is a polygonal prism structure; or, the annular body (11) is a circular structure, and the hollow body (3) is a cylindrical structure; or, the annular body (11) is an elliptical annular structure, and the hollow body (3) is an elliptical cylindrical structure.

9. The elastic core structure according to claim **8,** wherein the annular body (11) is a regular hexagonal structure, the multiple annular bodies (11) in each elastic layer (1) are connected to each other to form a honeycomb structure, and the hollow body (3) is a hexagonal prism structure.

10. The elastic core structure as claimed in claim **1,** wherein the elastic core structure is made of thermoplastic elastomer materials.

11. A household article, comprising the elastic core structure as claimed in any one of claims **1** to **10.**

12. The household article as claimed in claim **11,** wherein the household article is mattress, floor mat, seat cushion, backrest, cushion, or pillow.
